# EUROPÄISCHE PATENTSCHRIFT

(11) **EP 0 677 459 B1**
(45) Veröffentlichungstag und Bekanntmachung des Hinweises auf die Patenterteilung: **11.11.1998**
(21) Anmeldenummer: 95810241.0
(22) Anmeldetag: 10.04.1995
(51) Int. Cl.: B65G 1/137

(54) **Verfahren und Anordnung zum Kommissionieren**
Method and arrangement for order picking
Méthode et dispositif pour la préparation de commandes

(30) Priorität: 13.04.1994 CH 1095/94
(43) Veröffentlichungstag der Anmeldung: 18.10.1995
(73) Patentinhaber: SFT AG Spontanfördertechnik, CH-8570 Weinfelden (CH)
(72) Erfinder: Wellinger, Bernhard, CH-8583 Donzhausen (CH)
(74) Vertreter: Frei, Alexandra Sarah

(56) Entgegenhaltungen:
- EP-A- 0 403 726
- DE-A- 3 630 095
- FR-A- 2 582 629
- GB-A- 700 262

## Beschreibung

Die Erfindung betrifft ein Verfahren und eine Anordnung gemäss den entsprechenden Patentansprüchen zum Kommissionieren, insbesondere zum Kommissionieren von Druckprodukten wie Zeitungen, Zeitschriften, Broschüren etc.

Kommissionieren heisst, aus einem Angebot verschiedener Produkte Kommissionen beliebiger Grösse herzustellen, wobei jede Kommission aus einer beliebigen Anzahl von Produktegruppen besteht, welche Produktegruppen je eine beliebige Anzahl von Exemplaren eines Produktes umfassen. Zur Herstellung einer Kommission sind eine Anzahl von Kommissionierschritten notwendig, wobei jeder Kommissionierschritt darin besteht, zu einer entstehenden Kommission eine Produktegruppe oder Teilgruppe, also eine beliebige Anzahl Exemplare eines Produktes zuzufügen. Dazu kann die entstehende Kommission für jeden Kommissionierschritt zu der Quelle des entsprechenden Produktes bewegt werden oder die Produktegruppe kann zur entstehenden Kommission bewegt werden, wobei auch Kombinationen dieser beiden Methoden möglich sind.

Gemäss dem Stande der Technik werden Druckprodukte beispielsweise zur kundenspezifischen Auslieferung kommissioniert, indem sie meist in Handarbeit in Stapeln oder entsprechenden Behältern zu Kommissionen vorgegebener Zusammensetzung gesammelt und dann einer Verpackungsstation zugeführt werden, wo jede Kommission beispielsweise zu einer Anzahl von Paketen mit einer Maximalgrösse und einer Anzahl von Paketen kleiner als die Maximalgrösse (vorteilhafterweise nur ein derartiges Paket) verpackt werden. Eine andere Anwendung des Kommissionierens ist beispielsweise die Zusammenstellung von Sortimenten von Teilen für eine gemeinsame Weiterverarbeitung, beispielsweise Montage oder Ähnliches.

Die Kommissionierung gemäss dem Stande der Technik ist durch den hohen Anteil an Handarbeit sehr aufwendig und nur mit hohem Platz- und Personalaufwand leistungsfähig gestaltbar.

Die Publikation DE-3630095 beschreibt ein mindestens teilweise automatisiertes Kommissioniersystem. Dieses System basiert auf einer Anordnung einer Mehrzahl von Lagerplätzen für verschiedene Produkte und von verschiedenen Transportwegen zwischen den Lagerplätzen. Jeder entstehenden Kommission wird ein Identträger mitgegeben, dessen Inhalt zur Steuerung von Kommissionierschritten und von Transportschritten von an entsprechenden Orten des Systems angeordneten Schreib/Lesegeräten ausgelesen wird.

Es ist nun die Aufgabe der Erfindung, ein Kommissionierungsverfahren aufzuzeigen, und eine Anordnung zur Durchführung dieses Verfahrens zu schaffen, mit denen eine hoch effiziente und voll automatiserbare Kommissionierung möglich wird. Das Verfahren soll es aber trotzdem erlauben, Kommissionen in einer optimalen Form, beispielsweise als minimale Anzahl von einfach weiter zu verarbeitenden Teilkommissionen (Paketen) herzustellen, derart, dass auch die Weiterverarbeitung (Verpacken) mit einem Minimum an Aufwand durchführbar und voll automatisierbar wird.

Diese Aufgabe wird gelöst durch das Kommissionierungsverfahren und die Anordnung zur durchführung des Verfahrens, wie sie in den Patentansprüchen definiert sind.

Das erfindungsgemässe Verfahren beruht auf einem Feld von stationären Kommissionierstationen, zu denen mindestens je ein Produkt zugeführt wird und in denen Gruppen bestehend aus einer beliebigen, vorgegebenen Anzahl von Exemplaren dieses Produkts an entstehende Kommissionen abgegeben werden. Die Kommissionierstationen sind integriert in ein Netz von Verbindungswegen, auf denen in vorgegebener Richtung entstehende Kommissionen verkehren. Zusätzlich zu den Kommissionierstationen und den die Kommissionierstationen verbindenden Verbindungswegen weist das Kommissionierfeld mindestens einen Ausgang auf, der über Ausgangswege mit mindestens einem Teil der Kommissionierstationen verbunden ist. Auf den Ausgangswegen verkehren fertige Kommissionen oder Teilkommissionen in Richtung Ausgang.

In diesem Kommissionierfeld laufen zeitlich parallel und in zeitlich getakteter Aufeinanderfolge Kommissionierschritte ab. Ein Takt (Zeittakt) besteht dabei mindestens für den Bereich des Kommissionierfeldes aus zwei Teilen: einem Transportteil und einem Kommissionierteil. Während des Transportteils werden entstehende Kommissionen über eine einem Zeittakt zugeordnete Strecke (Ortstakt) transportiert, beispielsweise von einer Kommissionierstation zu einer anderen. Während dem Kommissionierteil werden Produktegruppen an entstehende Kommissionen abgegeben. Es ist dabei im Sinne einer Verkürzung der Taktzeit vorteilhaft, die Produktegruppen während dem Transportteil des Zeittaktes vorzubereiten (Exemplare vereinzeln, abzählen und zu einer Gruppe zusammenfügen) und die vorbereitete Gruppe als Ganzes während dem Kommissionierteil an die entstehende Kommission abzugeben. Die Zweiteilung des Zeittaktes gilt nur für den Bereich der Kommissionierstationen. Im Bereiche der Ausgangswege und des Ausgangs aus dem Kommissionierfeld und im Bereiche der Weiterverarbeitung der Kommissionen, die dem gleichen Takt unterworfen sein kann, fällt die Zweiteilung des Taktes dahin, das heisst der ganze Zeittakt kann beispielsweise für Transport ausgenützt werden.

Das erfindungsgemässe Verfahren besteht nun im wesentlichen darin, zeitlich parallel und getaktet an den Kommissionierstationen ablaufende Kommissionierschritte durch Bewegung der entstehenden Kommissionen oder Teilkommissionen auf den Verbindungs- und Ausgangswegen derart zeitlich und örtlich zu verknüpfen, dass am Ausgang oder an den Ausgängen des Kommissionierfeldes ein möglichst kontinuierlicher Strom von fertigen Kommissionen und/oder Teilkommissionen mit vorgegebenen Zusammensetzungen anfällt und zwar mit einer Sequenz, die bestimmte, beispielsweise durch die Art der Weiterverarbeitung gegebene Bedingungen erfüllen kann. Diese Weiterverarbeitung besteht in an sich bekannter Art beispielsweise darin, dass die hergestellten Kommissionen und/oder Teilkommissionen adressiert, verpackt und einer Versandroute zugeordnet werden.

Der Gesamtweg einer entstehenden Kommission oder Teilkommission im Kommissionierfeld, also die Aufeinanderfolge von Verbindungswegen von einer Kommissionierstation zu einer nächsten und einem Ausgangsweg zum Ausgang aus dem Kommissionierfeld, ist primär bestimmt durch die vorgegebene Zusammensetzung der Kommission oder Teilkommission, durch die festgelegt ist, zu welchen Kommissionierstationen die entstehende Kommission mindestens geführt werden muss. Der Gesamtweg kann weiter bestimmt sein durch eine beispielsweise durch das Format der zu kommissionierenden Produkte vorgegebene Kommissionierreihenfolge (grössere Produkte zuerst etc.). Die Taktfolge (insbesondere der erste Takt), in der eine bestimmte Kommission oder Teilkommission entsteht, wird in einem Optimierungsprozess derart bestimmt, dass möglichst alle Kommissionierstationen möglichst gleichmässig und optimal ausgelastet sind und "Nullkommissionierschritte" (Zuführung einer Produktegruppe mit Null Exemplaren) möglichst vermieden werden. Randbedingungen für den Optimierungsprozess können durch Anforderungen an die Ausgangssequenz der Kommissionen und/oder Teilkommissionen entstehen.

Jede entstehende Kommission oder Teilkommission ist organisatorisch identifiziert durch ihre Kommissions-Zuordnung und durch eine Abfolge von Datensätzen die aus je einer Taktzahl, einer Kommissionierstation und einer abzugebenden Anzahl von Exemplaren besteht. Die Abfolge der Datensätze bestimmt den Weg der entstehenden Kommission oder Teilkommission durch das Kommissionierfeld und die Taktfolge, in der dieser Weg zurückgelegt wird, also auch den Takt, in dem die Kommission oder Teilkommission am Ausgang erscheint.

Die örtliche und zeitliche Taktkontrolle des Kommissionierfeldes kann absolut starr sein, das heisst, dass in jedem Takt bewegt und kommissioniert wird, oder sie kann flexibler gestaltet sein, dadurch, dass entstehende Kommissionen auf Verbindungswegen gepuffert werden können, dass entstehende Kommissionen Kommissionierstationen ohne Kommissionierschritt passieren können, dass entstehende Kommissionen mehrere Takte lang in einer Kommissionierstation verbleiben können etc.

Zu den oben beschriebenen mechanischen Verfahrensschritten, die im wesentlichen aus getaktetem Transportieren entstehender Kommissionen oder Teilkommissionen, aus Vorbereiten von Produktegruppen und aus Zugabe von Produktegruppen zu entstehenden Kommissionen oder Teilkommissionen bestehen, kommen organisatorische Verfahrensschritte. Diese sind im wesentlichen eine Kommissionsdatenerfassung und -aufbereitung, eine Weg- und Taktfolgenzuweisung (Optimierung) und eine Steuerdatenerzeugung.

In der Kommissionsdatenerfassung und -aufbereitung werden aus für jede Kommission erfassten Kommissionsdaten (beispielsweise Bestelldaten mit Produktebezeichnungen und Exemplaranzahlen) und gespeicherten Produktedaten (z.B. Grösse) und Teilkommissionsdaten (z.B. Paketgrösse) aufbereitete Komssionsdaten erstellt, die eine Summe von herzustellenden Teilkommissionen und deren Zusammensetzung (Produkte und Exemplaranzahlen) bestimmen.

In der Weg- und Taktfolgenzuweisung werden den durch die aufbereiteten Kommissionsdaten bestimmten Kommissionen und/oder Teilkommissionen unter Verwendung von Daten des Kommissionierfeldes (Zuordnung von Produkten zu Komissionierstationen, Verbindungswege, Ausgangswege, Bedingungen für die Reihenfolge von Kommissionierschritten) Wege durch das Kommissionierfeld zugeordnet. Sind mehrere derartige Wege möglich, wird der Weg im Zusammenhang mit der Taktfolgenzuweisung optimiert. Diese Taktfolgenzuweisung wird vorteilhafterweise in einer Optimierung durchgeführt, deren Randbedingungen Sequenzbedingungen am Ausgang des Taktfeldes sind und deren Ziel es ist, möglichst alle Kommissionierstationen möglichst gut auszulasten.

Durch die Weg- und Taktfolgenzuweisung wird für jeden Takt die Zuordnung jedes Kommissionierschrittes zu einer bestimmten Kommission oder Teilkommission bestimmt und auch die Ausgangssequenz der Kommissionen und Teilkommissionen. Aus den Daten dieser Zuordnung können also in einem Schritt der Steuerdatenerzeugung für alle mechanischen Verfahrensschritte im Kommissionierfeld (Transport, Produktegruppen-Vorbereitung, Produktegruppen-Abgabe) für jeden Zeittakt Steuerdaten erzeugt werden. Es können auch weitere Steuerdaten für eine Weiterverarbeitung der Kommissionen und/oder Teilkommissionen (z.B. Adressierung, Erstellung und Zuordnung von Lieferscheinen etc.) erzeugt werden.

Anhand der folgenden Figuren soll nun das erfindungsgemässe Verfahren und die Anordnung zur Durchführung des Verfahrens detailliert beschrieben werden. Dabei zeigen:
- **Figur 1**: das Schema eines beliebigen Kommissionierfeldes mit einer Steuereinheit zur Durchführung des erfindungsgemässen Verfahrens;
- **Figur 2**: ein Schema zur Funktion der Steuereinheit des Kommissionierfeldes gemäss Figur 1;
- **Figuren 3 bis 5**: Schemata verschiedener Ausführungsformen von Anordnungen zur Durchführung des erfindungsgemässen Verfahrens;
- **Figuren 6 bis 8**: eine beispielhafte Ausführungsform von zusammenwirkendem Transportmittel und Kommissionierstation;
- **Figur 9**: eine beispielhafte Ausführungsformen einer Kommissionierstation mit Produktezuführung;
- **Figuren 10 und 11**: eine beispielhafte Ausführungsformen einer erfindungsgemässen Anordnungen für die Kommissionierung von Zeitungen, Zeitschriften und Ähnlichem (Figur 10) und das zugehörige Schema (Figur 11).

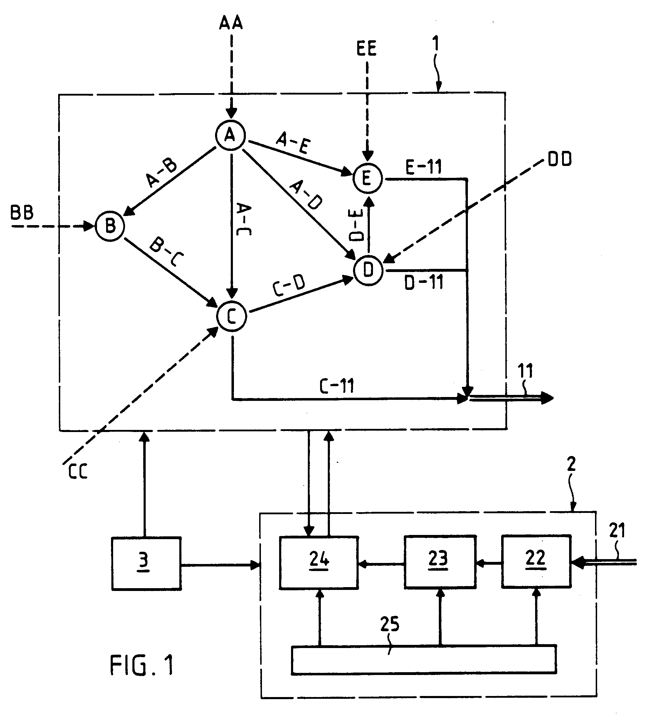

**Figur 1** zeigt in sehr schematisierter Art ein beispielhaftes Kommissionierfeld 1 zur Herstellung von beliebigen Kommissionen aus den Produkten A, B, C, D, E mit einer Steuereinheit 2 und einem Taktgeber 3. Das Kommissionierfeld 1 weist fünf Kommissionierstationen auf, die der Einfachheit halber mit den Buchstaben A, B, C, D, E der ihnen zugeordneten Produkte bezeichnet sind. Zu den Kommissionierstationen werden aus entsprechenden Quellen AA, BB, CC, DD, EE Exemplare der Produkte von aussen zugeführt. Das Kommissionierfeld weist ferner Verbindungswege A-B, B-C, A-C etc. auf, auf denen in Pfeilrichtung entstehende Kommissionen verkehren können. Ferner weist das Kommissionierfeld 1 Ausgangswege C-11, D-11 und E-11 auf, durch die mindestens ein Teil der Kommissionierstationen mit einem Kommissionierfeld-Ausgang 11 verbunden sind und auf denen fertige Kommissionen oder Teilkommissionen zum Ausgang 11 verkehren.

Die Steuereinheit 2 ist schematisch in Funktionsboxen aufgeteilt dargestellt. Diese sind Kommissionsdatenerfassung und -aufbereitung 22 mit einem Eingang 21 für Kommissionsdaten, Weg- und Taktfolgenzuweisung 23, Steuerdatenerzeugung 24 und ein Speicher 25 für Kommissionierfelddaten, Produktedaten, Weiterverarbeitungsdaten etc, also Daten, die nicht von den einzelnen Kommissionen, sondern von der Anordnung und dem Verfahren allgemein abhängig sind.

Die Steuereinheit 2 ist durch Datenleitungen mit dem Kommissionierfeld bzw. einzelnen Elementen des Kommissionierfeldes verbunden. Durch diese gelangen aus der Steuerdatenerzeugung Steuerdaten ins Kommissionierfeld und Messdaten von vorgesehenen Sensoren in die Steuereinheit, insbesondere in die Steuerdatenerzeugung.

Das Kommissionierfeld 1 und mindestens Teile der Steuereinheit 2 sind einem durch einen Taktgeber 3 gegebenen Systemtakt untergeordnet.

Die Figur 1 stellt ein funktionsmässiges Schema einer beispielhaften, einfachen Anordnung zum Kommissionieren dar und nicht ein anordnungsmässiges. Das heisst mit anderen Worten, in einer realen, erfindungsgemässen Anordnung zum Kommissionieren werden Kommissionierfeld 1, Steuereinheit 2 und Taktgeber 3 vorteilhafterweise nicht in der dargestellten Weise örtlich total voneinander getrennt sein. Es ist sehr gut möglich, beispielsweise die Steuerdatenerzeugung in den einzelnen Elementen des Kommissionierfeldes, insbesondere in den Kommissionierstationen vorzunehmen und/oder den Taktgeber in die Steuereinheit zu integrieren oder verschiedene synchronisierte Taktgeber im Kommissionierfeld anzuordnen.

In dem in der Figur 1 dargestellten Kommissionierfeld 1 entsteht eine Kommission mit der beispielhaften Zusammensetzung 5A+3C+7E auf der folgenden Wegabfolge: A - A-C - C - C-D - D - D-E - E - E-11, oder kürzer A-C-D-E-11, wobei an der Kommissionierstation D eine Nullkommissionierung erfolgt.

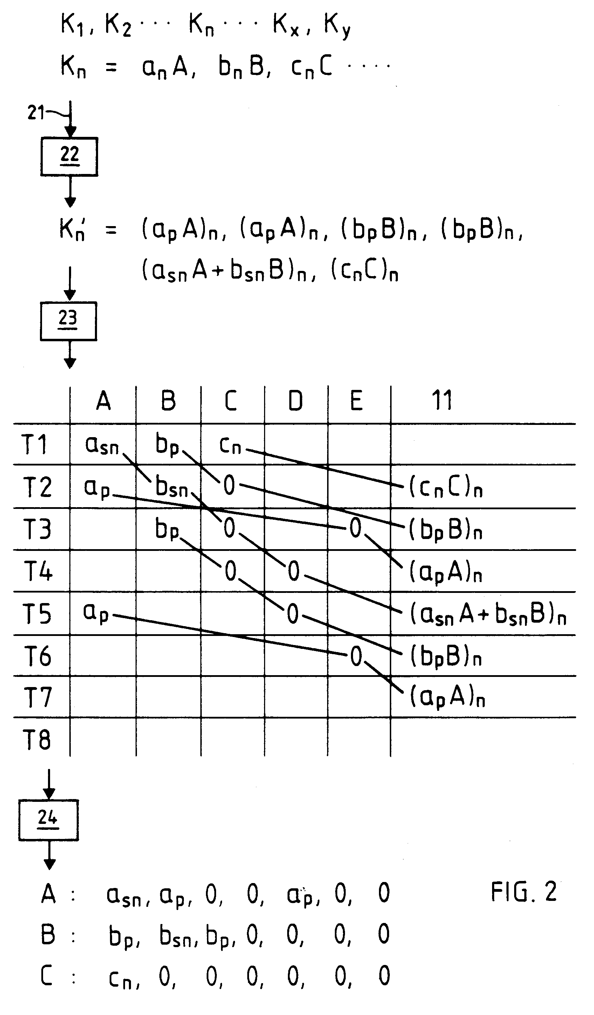

**Figur 2** zeigt noch mehr im Detail die Funktion der Steuereinheit (2 in Figur 1).

Am Kommissionsdateneingang 21 fallen eine Sequenz von Kommissionsdatensätzen K₁, K₂ ... Kₙ .... Kₓ, K_{y} an, wobei jeder Kommissionsdatensatz aus einer Anzahl von Paaren aus Produktidentifikation und Anzahl Exemplaren besteht. Allgemein lautet der Datensatz für die nte Kommission Kₙ = aₙA, bₙB, cₙC...., das heisst, diese nte Kommission soll aus aₙ Exemplaren des Produktes A, bₙ Exemplaren des Produktes B, cₙ Exemplaren des Produktes C etc. bestehen.

Die Aufbereitung der Kommissionsdaten (22) besteht beispielsweise darin, die Kommission, wenn notwendig, in auf dem Kommissionierfeld herstellbare Teilkommissionen zu zerlegen, beispielsweise in Pakete, in denen nur Exemplare eines Produktes verpackt sind und in sogenannte Spitzenpakete, die verschiedene Produkte umfassen. Aus dem Kommissionsdatensatz der nten Kommission Kₙ entstehen also aufbereitete Kommissionsdaten Kₙ' in Form einer Serie von Datensätzen für der nten Kommission zugeordnete Teilkommissionen. Zum Beispiel wird aus Kₙ: Kₙ' = (a_{P}A)ₙ, (a_{P}A)ₙ, (b_{P}B)ₙ, (b_{P}B)ₙ, (a_{Sn}A+b_{Sn}B)ₙ, (cₙC)ₙ, wobei a_{P} bzw. b_{P} die Anzahl Exemplare des Produktes A bzw. B in einem nur das eine Produkt enthaltenden Normpaket darstellt, welche Anzahl durch die Anordnung und das Verfahren gegeben und von der Kommission an sich unabhängig ist. Für die obige, beispielhafte nte Kommission gilt dabei: 2a_{P} + a_{Sn} = aₙ.

Aus der Kommissionsdatenaufbereitung geht also hervor, dass die obige, beispielhafte nte Kommission in Form von zwei Normpaketen (Maximalgrösse) des Produktes A, zwei Normpaketen des Produktes B, einem Spitzenpaket (Maximalgrösse oder kleiner) der Produkte A und B und aus einem Spitzenpaket (Maximalgrösse oder kleiner) des Produktes C ausgeliefert wird. Alle Pakete bleiben durch den Index n der nten Kommission zugeordnet.

In einem Verfahren, bei dem beliebige Grössen von Kommissionen als Ganzes kommissioniert und weiterverarbeitet, beispielsweise verpackt werden können, kann eine Kommissionsdatenaufbereitung wie oben beschrieben wegfallen. In der Kommissionsdatenaufbereitung können ferner maximale Exemplaranzahlen, die von einem Produkt in einem Takt abzählbar sind, oder ähnliche, Verfahrens- oder Anordnungs-spezisfische Grenzwerte berücksichtigt werden.

In der Weg- und Taktfolgenzuordnung (23) werden nun den in der Kommissionsdatenaufbereitung ermittelten Teilkommissionen Wege zugeordnet. Für ein Kommissionierfeld gemäss Figur 1 und die Teilkommissionen der obigen nten Kommission sind diese Wege: (a_{P}A)ₙ: A-C-11, A-D-11 oder A-E-11; (b_{P}B)ₙ: B-C-11, A-B-C-D-11 oder A-B-C-D-E-11; (a_{Sn}A+b_{Sn}B)ₙ: A-B-C-11 etc.

Dann werden den Kommissionen oder Teilkommissionen in einem Optimierungsprozess Taktfolgen zugeordnet und bei mehreren Möglichkeiten von Wegen wird deren Zuweisung ebenfalls in die Optimierung miteinbezogen. Es entsteht dadurch pro Takt und Kommissionierstation ein Datensatz, der die Zuordnung der zu beliefernden Teilkommission und die Anzahl zuzugebender Exemplare enthält, beispielsweise: T1/A: (a_{Sn}A+b_{Sn}B)ₙ,a_{Sn}, das heisst, im Takt 1 müssen an der Kommissionierstation A dem ersten Spitzenpaket der nten Kommission a_{Sn} Exemplare zugegeben werden.

Figur 2 zeigt als Resultat der Weg- und Taktfolgenzuweisung (23) in einer Tabelle eine Anzahl von derartigen Datensätzen, die eine beispielsweise Sequenz für die Kommissionierung der oben erwähnten nten Kommission in einem Kommissionierfeld gemäss Figur 1 darstellt. Die Zuordnung zu Teilkommissionen und Kommission sind erst in der hintersten Kolonne (Ausgang) angegeben. Um den Zusammenhang zwischen der Tabelle, die ein getaktetes Zeit/Ort-Feld darstellt, mit den aufbereiteten Kommissionsdaten Kₙ' der nten Kommission zu verdeutlichen, ist die Entstehung der einzelnen Teilkommissionen im Zeit/Ort-Taktfeld durch diagonale Linien angedeutet. Aus der letzten Kolonne der Tabelle ist die Ausgangssequenz der Teilkommissionen am Ausgang 11 des Kommissionierfeldes ablesbar. Das erste Spitzenpaket (a_{Sn}A+b_{Sn}B)ₙ der beschriebenen, beispielhaften nten Kommission erhält gemäss Tabelle die folgenden Daten: T1/A:a_{Sn}, T2/B:b_{Sn}, T3/C: 0, T4/D: 0, T5/11.

Aus den Datensätzen des Zeit/Ort-Taktfeldes sind nun in an sich bekannter Weise in einem Verfahrensschritt der Steuerdatenerzeugung 24 abhängig von den mechanischen Elementen des Kommissionierfeldes Steuerdaten zur Steuerung dieser mechanischen Elemente erstellbar, also, wie in der Figur 2 dargestellt, beispielsweise taktweise Zählbefehle für die Vorbereitung der je einem Takt zugeordneten Produktegruppe an den Kommissionierstationen, aber auch Steuerbefehle für Transportschritte bzw. Zulassung zu Kommissionierstationen etc.

Das im Zusammenhang mit den Figuren 1 und 2 beschriebene Kommissionierungsverfahren und die entsprechende Anordnung stellen einen einfachen, beispielhaften Fall dar. Die Zahl der Kommissionierstationen, die Art der Zuführungen der Produkte und ihre Zuordnung zu bestimmten Kommissionierstationen sowie die Einrichtung der Verbindungs- und Ausgangswege im Kommissionierfeld muss für jeden konkreten Fall an die zu kommissionierenden Produkte und an die zu erwartende Art der zu erstellenden Kommissionen angepasst werden. Die Funktion der beschriebenen Anordnung ist örtlich und zeitlich starr getaktet. Wie bereits eingangs erwähnt, kann aber diese Starrheit auf verschiedene Weise gelockert werden, wobei für die Optimierung mehr Flexibilität entsteht.

Es können beispielsweise zwischen den Kommissionierstationen und vor dem Ausgang Puffer vorgesehen sein, derart, dass entstehende Kommissionen oder Teilkommissionen auf den Verbindungswegen einen oder mehrere Takte warten können (ohne Verlust ihrer gegenseitigen Anordnung, durch die ihre Identifikation erhalten bleibt), bevor sie zur nächsten Kommissionierstation zugelassen werden. Der Ausgang kann in diesem Falle auch einem einer Weiterverarbeitung entsprechenden schnelleren Takt untergeordnet sein. Es können auch mehrere Ausgänge vorgesehen sein, beispielsweise Ausgänge von jeder Kommissionierstation.

Um einen möglichst schnellen Takt zu ermöglichen, können einem Produkt, von dem beispielsweise für ein Normpaket sehr viele Exemplare abgezählt werden müssen oder dessen Zählung oder Zufuhr aus irgend einem Grunde langsamer verläuft, mehrere Kommissionierstationen zugeordnet sein oder aber eine entsprechende Kommission kann mehr als einen Takt auf der diesem Produkt zugeordneten Kommissionierstation verbleiben. Andererseits können verschiedene Produkte, die seltener gebraucht werden einer einzigen Kommissionierstation zugeordnet sein.

Es kann auch vorgesehen werden, dass entstehende Kommissionen, die eine Kommissionierstation aus Wegbedingungen passieren müssen, in dieser aber keine Produktegruppe erhalten (Nullkommissionierung) ohne Taktverlust passieren können, das heisst, dass sie in einem Zeittakt von einer Kommissionierstation zur übernächsten oder einer noch weiter entfernten auf ihrem vorgegebenen Weg transportiert werden (zwei oder mehrere Ortstakte).

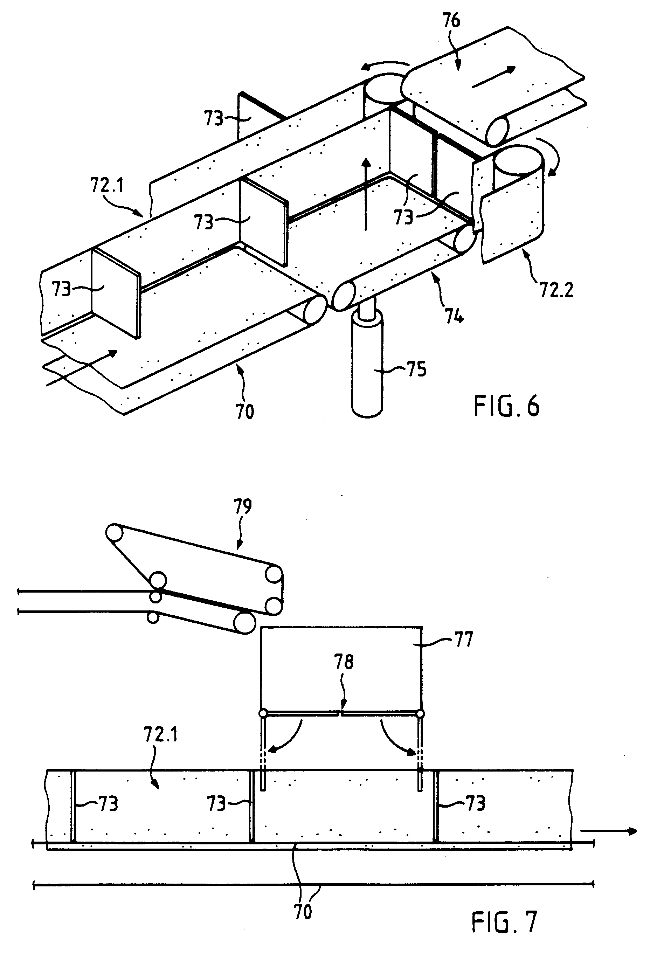

Die Kommissionen oder Teilkommissionen können beispielsweise als freie Stapel entstehen. Diese können durch Transportmittel, die eine Art Abteile bilden (siehe Figuren 6 bis 8) voneinander getrennt und stabilisiert sein. Die Kommissionen oder Teilkommissionen können aber auch in Behältern entstehen, die bereits wenigstens einen Teil der Verpackung darstellen. Derartige Behälter können auch einer Kommissionierstation des Kommissionierfeldes zugeführt werden, wobei dann jeder Kommission oder Teilkommission in einem ersten Kommissionierschritt ein Behälter zugegeben wird. Im Kommissionierfeld gemäss Figur 1 würde sich die Kommissionierstation A für diesen ersten Kommissionierschritt eignen. Die Behälter für die entstehenden Kommissionen und Teilkommissionen können innerhalb der Kommissionieranordnung oder einem grösseren System, das beispielsweise den Empfänger der Kommissionen mit umfasst, rückgeführt werden.

Die Produktezuführungen zu den Kommissionierstationen sind auf die zuzuführenden Produkte abzustimmen. Es kann sich dabei um voll automatische Zuführungen oder aber auch um mindestens teilweise handbetriebene Zuführungen handeln. Die Kommissionierstationen weisen, wie bereits eingangs erwähnt, vorteilhafterweise einen Vorsammler auf, in dem pro Takt eine Produktegruppe vorbereitet wird, die dann der entstehenden Kommission oder Teilkommission als Ganzes zugegeben wird. Dadurch entsteht eine optimale Ausnützung der Zeit mit einer Kommissionierung, in der sowohl die entstehende Kommission oder Teilkommission gegen die Produktegruppe geführt als auch die Produktegruppe gegen die entstehende Kommission geführt wird.

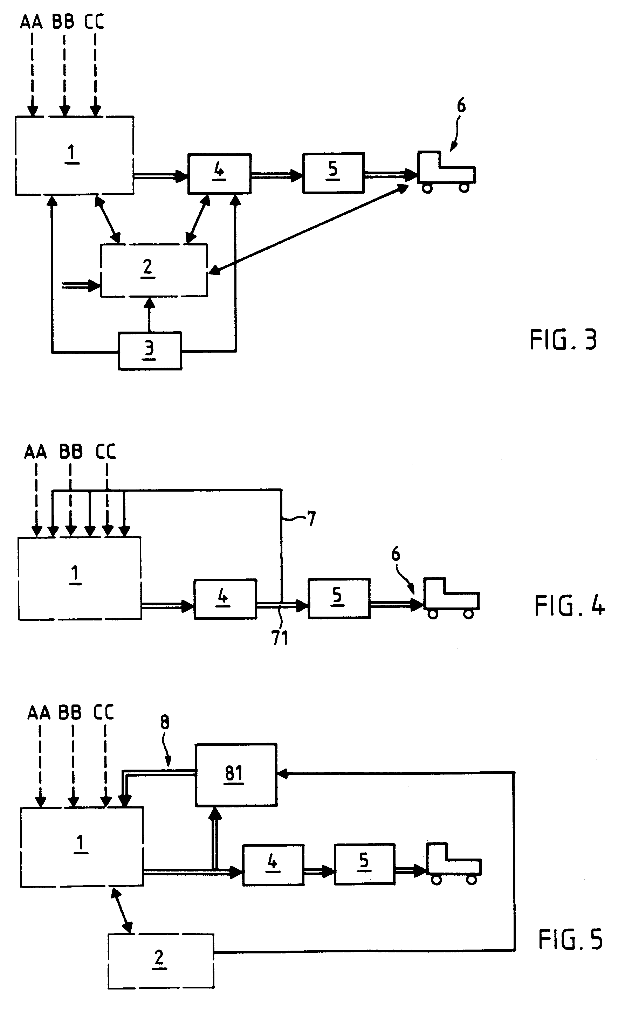

Das im Zusammenhang mit den Figuren 1 und 2 beschriebene einfache Kommissionierfeld mit der zugehörigen Steuereinheit kann in verschiedenster Weise variiert und erweitert werden. Einige beispielhafte weitere Ausführungsformen sollen in derselben schematischen Art im Zusammenhang mit den Figuren 3 bis 5 beschrieben werden. Dabei sind die gleichen Elemente mit den gleichen Bezugsziffern bezeichnet und Kommissionierfeld 1 und Steuereinheit 2 nur mit entsprechenden Boxen mit Ein- und Ausgängen dargestellt.

**Figur 3** zeigt eine um eine Weiterverarbeitung erweiterte Kommissionieranordnung. Diese Weiterverarbeitung besteht beispielsweise aus einer ebenfalls dem Systemtakt des Taktgebers 3 unterworfenen Identifikationsstation 4, in der beispielsweise durch Auflegen eines Adressblattes jede das Kommissionierfeld verlassende Kommission oder Teilkommission sichtbar als zu einer Kommission zugehörend identifiziert wird. Auf die Identifikationsstation folgt beispielsweise eine Verpackungsstation 5, in der die Kommissionen oder Teilkommissionen verpackt, das heisst beispielsweise in individuelle Säcke gefüllt, umschnürt oder mit Folien umhüllt werden. Je nach Art der Verpackung kann die Identifizierung auch erst auf die Verpackung folgen. Aus der Verpackungsstation 5 werden die fertigen Pakete einer Auslieferungsstation 6 zugeführt, wo sie beispielsweise in Lastwagen verladen werden.

Wenn, wie in der Figur 3 dargestellt, nur eine Auslieferungsstation 6 vorgesehen ist, ist es vorteilhaft, die Sequenz der am Ausgang des Kommissionierfeldes und damit auch an der Auslieferungsstation 6 erscheinenden Teilkommissionen derart zu organisieren, dass die Teilkommissionen einer bestimmten Kommission unmittelbar nacheinander erscheinen. Dies bedeutet als Randbedingung für die Weg- und Taktfolgenoptimierung, dass die Ausgangssequenz nur innerhalb einer Kommission frei wählbar ist. Durch entsprechende Steuerdaten aus der Steuereinheit wird an der Auslieferungsstation beispielsweise die Kommission identifiziert und deren Anfang (erste Teilkommission) und Ende (letzte Teilkommission) angezeigt.

Eine die Ausgangssequenz und damit auch die Weg- und Taktfolgenoptimierung einschränkende Wirkung der Auslieferungsstation kann verhindert werden, indem diese mit einem durch die Steuereinheit gesteuerten Weichensystem ausgerüstet wird. Dadurch können zusammengehörende Teilkommissionen, auch wenn sie nicht unmittelbar nacheinander am Ausgang erscheinen, auf einen bestimmten Auslieferungsweg geleitet werden. Das Kommissionierfeld kann auch mehr als einen Ausgang aufweisen.

**Figur 4** zeigt eine weitere beispielhafte Ausführungsform mit einer integrierten Behälterrückführung 7 wobei die Behälter Anordnungs-intern zirkulieren und beispielsweise, wie dargestellt, allen Kommissionierstationen wieder zugeführt werden können. Behälter und fertiggestellte Kommissionen oder Teilkommissionen werden an einer Trennstelle 71 voneinander getrennt. Eine derartige Trennstelle, in der ein Transportmittel in den Behälter eingreift und die Kommissionen oder Teilkommissionen weiter fördert und die Behälter nach unten aus dem Bereich der Kommissionen weggeführt werden, ist beispielsweise beschrieben in der Patentveröffentlichung EP-0350473 (Media Craft).

Die Anordnungs-internen Behälter können auch, wie bereits erwähnt, nur einer Kommissionierstation zugeführt werden, der dann vorteilhafterweise kein im eigentlichen Sinne zu kommissionierendes Produkt zugeführt wird.

**Figur 5** zeigt noch eine Erweiterung der effindungsgemässen Anordnung durch eine Kommissionsrückführung 8 von Kommissionen oder Teilkommissionen und einen in diese Rückführung eingeschalteten Puffer 81. Eine derartige Rückführung 8 von bestimmten Kommissionen oder Teilkommissionen ist beispielsweise notwendig, wenn mehr Produkte kommissioniert werden als Kommissionierstationen vorhanden sind, wobei dann zwischen Durchgängen durch das Kommissionierfeld das Produkt, das zu mindestens einem Teil der Kommissionierstationen zugeführt wird, gewechselt wird. Die Kommissionsrückführung 8 kann auch vorteilhaft sein, um Nullkommissionierschritte zu vermeiden. Ferner kann sie vorteilhaft sein bei sehr unterschiedlichen Kommissionszusammensetzungen, die, wenn sie mit einem gegebenen Takt in jedem Falle in einem Durchgang gemeistert werden müssten, diesen Takt erheblich verlangsamen würden. Der Puffer 81 wird ebenfalls von der Steuereinheit 2 gesteuert und ist vorteilhafterweise derart ausgestaltet, dass möglichst jede Kommission oder Teilkommission unabhängig vom Zeitpunkt ihrer Einlagerung möglichst zu jedem Zeitpunkt wieder ausgelagert, d.h. wieder in das Kommissionierfeld geführt werden kann. Ein derartig ausgerüsteter Puffer lässt der Weg- und Taktfolgenoptimierung die Rückführungssequenz offen, bewirkt also keine oder nur wenige einengende Rahmenbedingungen.

Selbstverständlich sind verschiedenste Anordnungen denkbar, in denen Merkmale der in den Figuren 3 bis 5 dargestellten Anordnungen kombiniert oder mehrere gleiche oder verschiedene derartige Anordnungen zu einem System verbunden sind.

**Figuren 6 bis 8** zeigen eine beispielhafte Ausführungsform für ein Transportmittel zum Transport entstehender Kommissionen oder Teilkommissionen im Kommissionierfeld und eine Kommissionierstation, die mit dem Transportmittel zusammenarbeitet. Dieses Transportmittel ist anwendbar für örtlich und zeitlich starr getaktete Kommissionierfelder oder Kommissionierfeldteile.

**Figur 6** zeigt das Transportmittel, das im wesentlichen aus einem Transportband 70 und zwei seitlich davon angeordneten, synchronisiert mit dem Transportband 70 angetriebenen Seitenbändern 72.1 und 72.2 besteht. Die Seitenbänder weisen dabei Teilungsstücke 73 auf, die quer zu den Seitenbändern über dem Transportband angeordnet sind. Diese Teilungsstücke können, wie dargestellt, paarig an beiden Seitenbändern angeordnet sein und zusammen eine Breite haben, die der Breite des Transportbandes etwa entspricht, oder sie können auch nur an einem Seitenband angeordnet sein und eine entsprechende Breite aufweisen. Durch die Teilungsstücke 73 wird der Transportraum über dem Transportband in Abteile aufgeteilt, in denen Kommissionen oder Teilkommissionen entstehen können.

Um Kommissionen oder Teilkommissionen aus derartigen Abteilen beispielsweise für die Verpackung zu entfernen kann an ein Ende des Transportbandes 70 ein Endband 74 anschliessen, wobei das Endband eine Länge aufweist, die kleiner ist als die Länge eines Abteils des Transportraumes und beidseitig von den Seitenbändern flankiert ist. Das Endband 74 ist beispielsweise mit Hilfe eines hydraulischen Antriebes 75 gegen oben hebbar ausgestaltet, derart, dass es eine darauf angeordnete Kommission oder Teilkommission über die Höhe der Teilungsstücke 73 heben kann. Auf dieser Höhe schliesst dann ein weiteres Transportmittel, beispielsweise ein weiteres Transportband 76 an, das die Kommissionen oder Teilkommissionen vom erhobenen Endband 74 übernimmt.

Transportband 70, Seitenbänder 72.1 und 72.2 und Endband 74 werden getaktet angetrieben. Die Teilungsstücke 73 können mit gleichen Abständen voneinander angeordnet sein, wobei dann ein Ortstakt der Abteillänge in Transportrichtung oder einem Vielfachen der Abteillänge entspricht. Das Transportband 70 kann auch beispielsweise durch eine Rollenbahn ersetzt werden.

**Figur 7** zeigt eine einfache Ausführungsform einer Zuführungsstation, die mit dem Transportmittel gemäss Figur 6 zusammenarbeitet. Es handelt sich dabei um einen gesteuerten Vereinzler 79, dem beispielsweise in Form eines Schuppenstromes Exemplare eines Produktes zugeführt werden. Der Vereinzler 79 zählt eine vorgegebene Anzahl von Exemplaren in einen Vorsammler 77, der über einem Transportmittel (70/72.1/72.2/73) gemäss Figur 6 angeordnet ist. Der Vorsammler 77 weist einen Boden 78 auf, der beispielsweise durch Aufklappen gegen unten geöffnet werden kann. Während das Transportmittel sich bewegt, ist der Boden 78 geschlossen und werden dem Vorsammler Exemplare in den Vorsammler gezählt. Wenn das Transportmittel nicht bewegt, und ein Abteil unter dem Vorsammler 77 positioniert ist, öffnet sich der Boden 78 und fallen die abgezählten Exemplare in das Abteil.

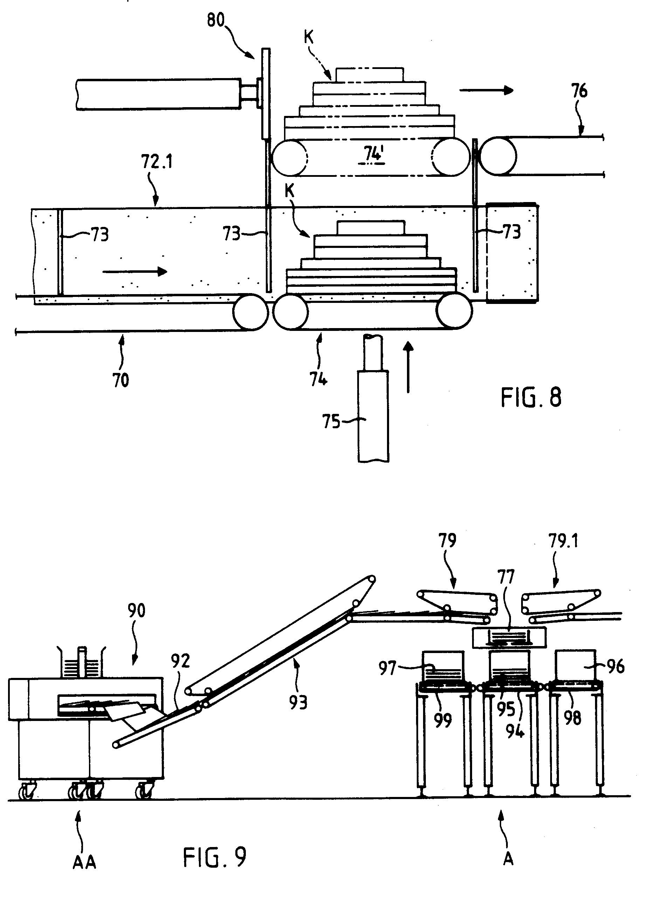

**Figur 8** zeigt nochmals im Detail den Übergang von einem Abteile bildenden Transportmittel (70/72.1/72.2/73) zu einem gleichen oder anderen, weiteren Transportmittel 76 durch Anheben einer Kommission oder Teilkommission K über die Seitenbänder 72.1 und Teilungsstücke 73. Um die Kommission oder Teilkommission K stabil zu halten kann diese mit einem sie auf drei Seiten und möglicherweise auch gegen oben umfassenden, beweglichen Schieber 80 vom erhobenen Endband 74' auf das weitere Transportmittel 76 geschoben werden. In einer Ausgestaltung mit Schieber kann die Bewegungsrichtung des weiteren Transportmittels 76 auch verschieden sein von der Bewegungsrichtung des Transportbandes 70, beispielsweise quer dazu. Ist das weitere Transportmittel 76 ebenfalls als Abteile bildendes Transportmittel ausgestaltet, kann die dargestellte Vorrichtung auch zur Richtungsänderung auf Verbindungswegen zwischen Kommissionierstationen oder, entsprechend erweitert als Weichenstelle funktionieren.

**Figur 9** zeigt eine detaillierte, beispielhafte Ausführungsform einer Kommissionierstation A mit Produktezuführung AA, die je mit einem Verbindungsweg mit einer vorgehenden und einer nachfolgenden Kommissionierstation verbindbar ist, die an einen Ausgangsweg angeschlossen ist und die zusätzlich eine Behälterzuführung aufweist. Die Produktezuführung AA ist ein Anleger 90, der manuell mit Produktestapeln versorgt wird und einen Schuppenstrom 92 bestehend aus einzelnen Exemplaren des Produktes A produziert. Dieser Schuppenstrom 92 wird mit Hilfe eines Steigbandes 93 zur Kommissionierstation A geführt. Die Exemplare werden dort, wie bereits im Zusammenhang mit der Figur 7 beschrieben, von einem Vereinzler 79 übernommen und gezählt in einen Vorsammler 77 abgeworfen. Der Vorsammler 77 ist über dem Weg 94 (senkrecht zur Papierebene) einer entstehenden Kommission 95 angeordnet und dessen Boden öffnet sich für einen Kommissionierschritt, wenn eine entstehende Kommission darunter positioniert ist. Quer zum Weg 94 der entstehenden Kommission sind eine Zuführung (nicht dargestellt) für Behälter 96 und ein Ausgangsweg (nicht dargestellt) für fertige Kommissionen 97 angeordnet, die an Sammeiwege (98 und 99) für Behälter 96 und fertige Kommissionen 97 anschliessen.

Die Kommissionierstation A zeigt auch einen zweiten Vereinzler 79.1, an den eine Zuführung eines zweiten Produktes anschliessbar ist.

Verbindungswege zwischen der dargestellten und weiteren Kommissionierstationen sowie Ausgangswege und Zuführungswege für Behälter sind vorteilhafterweise als Transportbänder ausgestaltet, die entweder in getakteter Folge angehalten und angetrieben werden oder die kontinuierlich arbeiten und mit entsprechend gesteuerten, schliessbaren Absperrungen im Bereiche des Ausgangs und/oder Eingangs zur Kommissionierposition unter dem Vorsammler 77 arbeiten.

Als Produktezufüfrungen an Kommissionierstationen anschliessbare Anleger sind beispielsweise beschrieben in der Patenveröffentlichung CH-598106 (F87). Produktezufühungen können beispielsweise auch in Form von Abwickelstationen oder auch Einzelblattauflegern, wie beschrieben beispielsweise in CH-667065 (F171) und CH-666237 (F181) oder als reine Handzuführungen ausgestaltet sein.

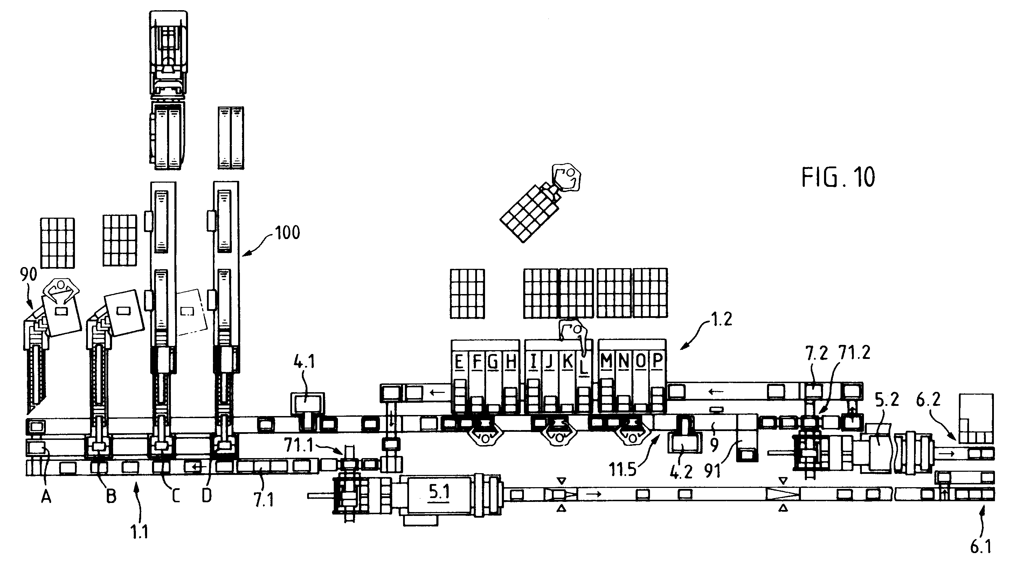

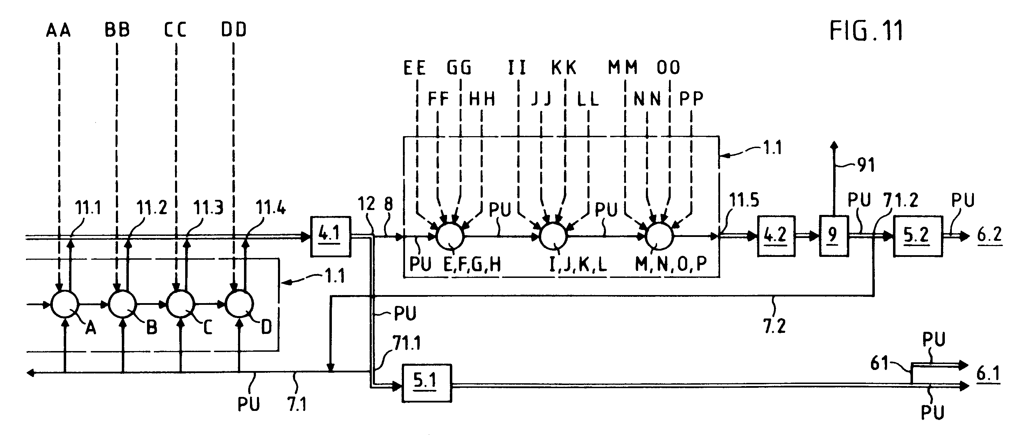

**Figuren 10 und 11** stellen eine beispielhafte Ausführungsform einer Kommissionierungs-Anordnung dar, die für die Durchführung des erfindungsgemässen Verfahrens, insbesondere auf dem Gebiete der Druckereiprodukte, also für die Kommissionierung von Zeitungen, Zeitschriften, Broschüren und Ähnlichem zur Anwendung kommen kann. Figur 10 zeigt die Anordnung im Detail, Figur 11 in der schematischen Art und Weise, die bereits für die Figuren 1 und 3 bis 5 eingeführt wurde. In der Figur 11 sind die Elemente der Anordnung auch mit Bezugsziffern bezeichnet, und zwar sind gleiche Elemente mit gleichen Bezugsziffern wie in den genannten Figuren bezeichnet. Figur 10 enthält nur die wichtigsten Bezugsziffern.

Die Anordnung besteht aus zwei, räumlich voneinander getrennten Kommissionierfeldteilen 1.1 und 1.2 und arbeitet mit anordnungs-internen Kommissionierbehältern, das heisst mit Behältern, die innerhalb der Anordnung rückgeführt werden. Der eine 1.1 der Kommissionierfeldteile arbeitet erfindungsgemäss nach einem Systemtakt, der zweite handbetriebene Kommissionierfeldteil 1.2 arbeitet in an sich bekannter Weise anhand einer zeitlichen Sequenz von Kommissionen und mit einer individuellen Taktfolge.

Der Kommissionierfeldteil 1.1 weist in einer Linie angeordnete Kommissionierstationen A, B, C, D auf. Die Linie der Kommissionierstationen kann sich gegen links in der Figur, wie es auch angedeutet ist, beliebig fortsetzen. Den Kommissionierstationen wird über Produktezuführungen AA, BB, CC, DD je ein Produkt ab Anleger 90 (AA und BB) oder ab Wickelstation 100 (CC und DD) zugeführt. Die Kommissionierstationen sind mit auf der Linie liegenden Verbindungswegen (A-B, B-C, C-D) miteinander verbunden und sind durch je einen Ausgangsweg mit je einem Ausgang 11.1, 11.2, 11.3, 11.4 verbunden. Die den Kommissionierfeldteil 1.1 verlassenden Kommissionen oder Teilkommissionen werden durch eine Indentifikatioonsstation 4.1 geführt, die die fertigen Kommissionen oder Teilkommissionen sichtbar identifiziert (adressiert). Darauf werden sie einer Verpackungsstation 5.1 zugeführt und von dort zu einer Auslieferungsstation 6.1 mit einem Weichensystem 61 transportiert und entsprechend ihrer Zuordnung zu einer bestimmten Kommission auf einen bestimmten Auslieferungsweg geleitet. Die Behälter, in denen die Kommissionen und Teilkommissionen entstehen, werden vor der Verpackungsstation 5.1 an einer Trennstelle 71.1 von den Kommissionen oder Teilkommissionen getrennt und in einer Behälterrückführung 7.1 zu jeder Kommissionierstation des Kommissionierfeldteiles 1.1 zurückgeführt.

Kommissionen und/oder Teilkommissionen, die nicht fertig sind, wenn sie aus dem Kommissionierfeldteil 1.1 austreten, passieren die Identifikationsstation 4.1, ohne identifiziert zu werden, und werden über eine Weiche 12 in einer Art Rückführung 8 in den Kommissionierfeldteil 1.2 eingeschleust. Dieser Kommissionierfeldteil weist drei Kommissionierstationen (E/F/G/H, I/J/K/L und M/N/O/P) auf, denen in Handarbeit je vier verschiedene Produkte zugeführt (EE, FF, GG....) und ebenfalls von Hand kommissioniert werden. Die kommissionierenden Personen erhalten dabei von der Steuereinheit (nicht dargestellt) auf einer entsprechenden Anzeige die Exemplaranzahlen, die sie der gerade bearbeiteten Kommission oder Teilkommission zuzugeben haben. Die Kommissionierstationen des Kommissionierfeldteils 1.2 sind ebenfalls auf einer Linie angeordnet und entlang dieser Reihe mit Verbindungswegen miteinander verbunden. Da der Kommissionierfeldteil 1.2 nur einen Ausgang 11.5 besitzt und dieser nur mit der letzten Kommissionierstation M/N/O/P der Reihe verbunden ist, müssen Kommissionen oder Teilkommissionen, die in den Kommissionierfeldteil 1.2 eingeschleust werden, alle Kommissionierstationen passieren, auch wenn beispielsweise nur ein Produkt zugegeben werden soll.

Vom Ausgang 11.5 des Kommissionierfeldteils 1.2 werden die fertigen Kommissionen und/und Teilkommissionen einer weiteren Identifikationsstation 4.2 zugeführt und dann einer Kontrollstation 9. Hier werden die Kommissionen und/oder Teilkommissionen beispielsweise gewogen. Stimmt ihr Gewicht mit ihrer vorgegebenen Zusammensetzung überein, werden sie weitergeleitet zu einer Verpackungsstation 5.2 und einer Auslieferungsstation 6.2. Fehlerhafte Kommissionen oder Teilkommissionen werden ausgeschleust (91). Vor der Verpackungsstation 5.2 werden Kommissionen und/oder Teilkommissionen vom Anordnungs-internen Behälter getrennt (Trennstelle 71.2) und dieser über eine Behälterrückführung 7.2 dem Kommissionierfeldteil 1.1 wieder zugeführt.

Das Transportwegsystem der Anordnung gemäss Figuren 10 und 11 weist an verschiedenen Stellen (in der Figur 11 mit PU bezeichnet) Pufferstellen auf. In diesen Pufferstellen werden die Kommissionen, Teilkommissionen oder leeren Behälter gepuffert. Dabei verlassen sie die Pufferstelle in derselben Reihenfolge, in der sie sie erreichen (first-in/first-out Prinzip), sodass ihre Sequenz und dadurch Identifikation erhalten bleibt.

Eine der Anordnung gemäss Figuren 10 und 11 übergeordnete Steuereinheit (nicht dargestellt) liefert Steuerdaten für mindestens die folgenden Elemente der Anordnung: Kommissionierstationen (A, B....) und Verbindungswege (bzw. Zugang und Abgang von Kommissionen aus Kommissionierstationen), Identifikationsstationen 4.1 und 4.2, Weiche 12 zwischen den Kommissionierfeldteilen 1.1 und 1.2, Kontrollstation 9 mit Ausschleusweiche 91, Weichensystem 61 der Auslieferungsstation 6.1. In den automatischen Kommissionierstationen A, B, C, D werden die Zähler und die Vorsammler, sowie die Bewegung der entstehenden Kommissionen oder Teilkommissionen und die Zuführung von Behältern gesteuert. Die Produktezuführungen können unabhängig sensorisch gesteuert werden. In den Handkommissioniersstationen (E/F/G/H....) wird die Anzeige gesteuert und pro Kommissionierschritt eine Quittierungsaktion der kommissionierenden Person aufgenommen.

Die Anordnung gemäss Figuren 10 und 11 ist eine beispielhafte Ausführungsform der erfindungsgemässen Anordnung. Sie kann, wie bereits im Zusammenhang mit den Figuren 3 bis 5 beschrieben in mannigfacher Weise verändert oder erweitert werden, wodurch sie an jedes Produkte- und Kommissionsspezifische Kommissionierungsverfahren optimal anpassbar ist.

## Patentansprüche

1. Verfahren zum Kommissionieren von Produkten, in welchem Verfahren in einem Kommissionierfeld (1) aus zugeführten Produkten Kommissionen (K) mit vorgegebenen Zusammensetzungen von beliebigen Anzahlen (a, b, c ...) beliebiger der zugeführten Produkte hergestellt und aus dem Kommissionierfeld (1) weggeführt werden, wobei das Kommissionierfeld (1) eine Mehrzahl von Kommissionierstationen (A, B, C,...), denen je mindestens ein Produkt zugeführt wird, Verbindungswege (A-B, B-C...) zwischen Kommissionierstationen, auf denen entstehende Kommissionen zwischen Kommissionierstationen in einer Richtung transportierbar sind, und Ausgangswege (D-11, E-11), auf denen fertiggestellte Kommissionen zu mindestens einem Ausgang (11) aus dem Kommissionierfeld transportierbar sind, aufweist, und wobei das Verfahren im wesentlichen aus Kommissionierschritten, in denen in Kommissionierstationen (A, B, C,...) Produktegruppen (aA, bB, cC ...) bestehend aus einer der vorgegebenen Zusammensetzung entsprechenden Anzahl von Exemplaren eines Produktes entstehenden Kommissionen (K) zugegeben werden, und aus Transportschritten, in denen entstehende Kommissionen (K) auf Verbindungswegen (A-B, B-C...) und Ausgangswegen (D-11, E-11) gefördert werden, besteht, **dadurch gekennzeichnet,**
dass in aufeinanderfolgenden Takten (T₁, T₂, T₃ ...) alternierend Kommissionierschritte und Transportschritte durchgeführt werden, wobei in einem Kommissionierteil jedes Taktes simultan in verschiedenen Kommissionierstationen (A, B, C,...) Kommissionierschritte durchgeführt werden und in einem Transportteil jedes Taktes auf verschiedenen Verbindungswegen (A-B, B-C...) und Ausgangswegen (D-11, E-11) simultan verschiedene Transportschritte durchgeführt werden,
dass für jede zu erstellende Kommission (K) ihrer vorgegebenen Zusammensetzung entsprechende Kommissionsdaten (Kₙ = aₙA, bₙB, cₙC...) erfasst werden,
dass in einem Optimierungsprozess mit vorgegebenen Randbedingungen jeder Kommission (K) ein den erfassten Kominissionsdaten entsprechender Weg durch das Kommissionierfeld (1) und eine Taktfolge zum Durchlaufen des Weges zugeordnet wird, derart, dass die Kommissionierstationen möglichst gleichmässig ausgelastet sind und Kommissionierschritte ohne Zugabe einer Produktegruppe möglichst vermieden werden,
und dass die Kommissionierschritte und Transportschritte durch Steuerdaten gesteuert werden, welche Steuerdaten anhand der den Kommissionen zugeordneten Wege und Taktfolgen erzeugt werden.

2. Verfahren nach Anspruch 1, **dadurch gekennzeichnet**, dass die vorgegebenen Randbedingungen für den Optimierungsprozess vorgegebene Sequenzbedingungen am Ausgant (11) des Kommissionierfeldes (1) oder Bedingungen für die Reihenfolge der Kommissionierschritte sind.

3. Verfahren nach Anspruch 1 oder 2, **dadurch gekennzeichnet,** dass die zu erstellenden Kommissionen in zu erstellende Teilkommissionen aufgeteilt werden, welche Teilkommissionene das Kommissionierfeld (1) in einer ihrer Zusammensetzung entsprechenden Art durchlaufen.

4. Verfahren nach Anspruch 3, **dadurch gekennzeichnet,** dass die Teilkommissionen Normpakete einer bestimmten Exemplaranzahl eines Produktes sind oder Spitzenpakete mit einem oder mehreren Produkten und Exemplaranzahlen, die kleiner sind als die Exemplaranzahlen der entsprechenden Normpakete.

5. Verfahren nach einem der Ansprüche 1 bis 4, **dadurch gekennzeichnet,** dass in einem zwischen Kommissionierschritten ausgeführten Transportschritt eine entstehende Kommissionen oder Teilkommission auf einem Verbindungsweg von einer Kommissionierstation zur nächsten transportiert wird, dass sie durch Transport über mehrere Verbindungswege eine oder mehrere Kommissionierstation passiert oder dass sie nicht transportiert wird und in der gleichen Kommissionierstation verharrt.

6. Verfahren nach einem der Ansprüche 1 bis 5, **dadurch gekennzeichnet,** dass entstehende Kommissionen und/oder Teilkommissionen auf Verbindungswegen oder Ausgangswegen gepuffert werden.

7. Verfahren nach einem der Ansprüche 1 bis 6, **dadurch gekennzeichnet,** dass während der Durchführung von Transportschritten zwischen Kommissionierschritten in den Kommissionierstationen Produktegruppen durch Vereinzeln und Abzählen der Exemplare vorbereitet werden und in den Kommissionierschritten vorbereitete Produktegruppen zu entstehenden Kommissionen oder Teilkommissionen zugegeben werden.

8. Verfahren nach einem der Ansprüche 1 bis 7, **dadurch gekennzeichnet,** dass die entstehenden Kommissionen und/oder Teilkommissionen in durch das Transportmittel gebildeten Abteilen oder in Behältern transportiert werden.

9. Verfahren nach Anspruch 8, **dadurch gekennzeichnet,** dass die Behälter Anordnungs-intern oder System-intern rückgeführt werden.

10. Verfahren nach einem der Ansprüche 1 bis 9, **dadurch gekennzeichnet,** dass die aus dem Kommissionierfeld austretenden Kommissionen und/oder Teilkommissionen in einer Identifikationsstation (4) sichtbar identifiziert, in einer Verpackungsstation (5) verpackt, in einer Kontrollstation (9) kontrolliert und/oder in einer Auslieferungsstation (6) durch ein Weichensystem (61) verschiedenen Auslieferungswegen zugeleitet werden.

11. Verfahren nach einem der Ansprüche 1 bis 10, **dadurch gekennzeichnet,** dass Kommissionen und/oder Teilkommissionen nach ihrem Austritt aus dem Kommissionierfeld gepuffert werden und dann für eine weitere Kommissionierung wieder in das Kommissionierfeld zurückgeführt werden.

12. Verfahren nach einem der Ansprüche 1 bis 11, **dadurch gekennzeichnet,** dass die Kommissionsdaten (Kₙ) vor ihrer Weiterverarbeitung in der Weg- und Taktfolgenzuweisung (23) in einer Kommissionsdatenaufbereitung (22) zu aufbereiteten Kommissionsdaten (Kₙ') verarbeitet werden.

13. Anordnung zur Durchführung eines Verfahrens nach einem der Ansprüche 1 bis 12, welche Anordnung zur Durchführung von Kommissionierschritten und von Transportschritten ein Kommissionierfeld (1) aufweist mit einer Mehrzahl von Kommissionierstationen (A, B, C,...) mit je mindestens einer Zuführung (AA, BB, CC....) für ein Produkt und Mitteln zum Vereinzeln und gesteuerten Zählen der Exemplare dieses Produktes, mit einer Mehrzahl von mindestens je zwei Kommissionierstationen in einer Richtung verbindenden Transportmitteln (A-B, B-C...), mit deren Hilfe entstehende Kommissionen in einer Richtung transportierbar sind, und mit mindestens einen Teil der Kommissionierstationen mit Feldausgängen (11) verbindenden Transportmittel (C-11, D-11, E-11), mit deren Hilfe fertiggestellte Kommissionen zu mindestens einem Ausgang (11) aus dem Kommissionierfeld transportierbar sind, **dadurch gekennzeichnet,** dass zur Taktung von alternierenden Kommissionierschritten und Transportschritten ein Taktgeber (3) vorgesehen ist und dass zur Erfassung von Kommissionsdaten, zur Weg- und Taktfolgenzuweisung mit Optimierung und zur Steuerdatenerzeugung eine entsprechend ausgerüstete Steuereinheit (2) vorgesehen ist und dass die Kommissionierstationen und Transportmittel durch die Steuereinheit ansteuerbar sind.

14. Anordnung nach Anspruch 13, **dadurch gekennzeichnet,** dass an jede Kommissionierstation (A, B, C...) ein Transportmittel zu einem Ausgang (11.1, 11.2,...) angeschlossen ist.

15. Anordnung nach einem der Ansprüche 13 oder 14, **dadurch gekennzeichnet,** dass an mindestens einen Teil der Kommissionierstationen eine Zuführung für Kommissionsbehälter angeschlossen ist.

16. Anordnung nach einem der Ansprüche 13 bis 15, **dadurch gekennzeichnet,** dass mindestens ein Teil der die Kommissionierstationen verbindenden Transportmittel und/oder der Transportmittel der Ausgangswege als Abteile bildende Transportmittel (70/72.1/72.2/73) ausgebildet sind.

17. Anordnung nach Anspruch 16, **dadurch gekennzeichnet,** dass die Abteile bildenden Transportmittel ein Transportband (70) oder eine Rollenbahn und Seitenbänder (72.1, 72.2) mit Teilungsstücken (73) aufweisen.

18. Anordnung nach einem der Ansprüche 13 bis 17, **dadurch gekennzeichnet,** dass die Produktezuführungen zu mindestens einem Teil der Kommissionierstationen einen Anleger, eine Wickelstation oder einen Einzelblattaufleger aufweisen.

19. Anordnung nach einem der Ansprüche 13 bis 18, **dadurch gekennzeichnet,** dass mindestens ein Teil der Kommissionierstationen Vorsammler (77) zur Vorbereitung von Produktegruppen aufweisen.

20. Anordnung nach Anspruch 19, **dadurch gekennzeichnet,** dass die Vorsammler (77) über einer zu beliefernden Kommission oder Teilkommission angeordnet sind und dass deren Böden gesteuert entfernbar oder aufklappbar sind, sodass eine vorbereitete Produktegruppe auf die entstehende Kommission oder Teilkommission fällt.

21. Anordnung nach einem der Ansprüche 13 bis 20, **dadurch gekennzeichnet,** dass sie zusätzlich mindestens eine Identifikationsstation (4), mindestens eine Verpackungsstation (5), mindestens eine Auslieferungsstation (6) mit oder ohne Weichensystem (61) und/oder mindestens eine Rückführung (7) für Anordnungs-interne Kommissionsbehälter mit einer Trennstelle (71) zur Trennung von Behälter und Kommission oder Teilkommission aufweist.

22. Anordnung nach einem der Ansprüche 13 bis 21, **dadurch gekennzeichnet,** dass sie zusätzlich eine Rückführung (8) für Kommissionen und/oder Teilkommissionen mit einem Puffer (81) aufweist.

23. Anordnung nach einem der Ansprüche 13 bis 22, **dadurch gekennzeichnet,** dass sie mehrere Kommissionierfelder oder Kommissionierfeldteile (1.1, 1.2) aufweist, die verschiedenen Takten untergeordnet sind.

## Claims

1. Order-picking method for products, in which method, in an order-picking area (1) of supplied products, orders (K) having predefined compositions of any numbers (a, b, c...) of any of the supplied products are produced and led away from the order-picking area (1), the order-picking area (1) having a plurality of order-picking stations (A, B, C,...), to each of which at least one product is supplied, having connecting paths (A-B, B-C,...) between order-picking stations, on which orders being produced can be transported in one direction between order-picking stations, and having output paths (D-11, E-11), on which finished orders can be transported to at least one outlet (11) from the order-picking area, and the method essentially comprising order-picking steps in which, in order-picking stations (A, B, C,...), product groups (aA, bB, cC...) consisting of a number of units of a product, this number corresponding to the predefined composition, are added to orders (K) being produced, and comprising transport steps in which orders (K) being produced are conveyed on connecting paths (A-B, B-C...) and output paths (D-11, E-11), characterized
in that alternating order-picking steps and transport steps are carried out in successive cycles (T₁, T₂, T₃...), order-picking steps being carried out simultaneously in various order-picking stations (A, B, C,...) in an order-picking part of each cycle, and various transport steps being carried out simultaneously on various connecting paths (A-B, B-C...) and output paths (D-11, E-11) in a transporting part of each cycle,
in that for each order (K) to be put together, order-picking data (Kₙ = AₙA, bₙB, cₙC...) corresponding to its predefined composition are acquired,
in that, in an optimization process having predefined boundary conditions, each order K is assigned a path through the order-picking area (1) and a sequence of cycles for passing through the path, in accordance with the acquired order data, in such a way that the order-picking stations are utilized as uniformly as possible and order-picking steps without the addition of a product group are avoided as far as possible,
and in that the order-picking steps and transport steps are controlled via control data which are produced using the paths and sequences of cycles assigned to the orders.

2. Method according to Claim 1, characterized in that the predefined boundary conditions for the optimization process are predefined sequence conditions at the outlet (11) from the order-picking area (1) or conditions on the order of the order-picking steps.

3. Method according to Claim 1 or 2, characterized in that the orders to be put together are subdivided into part orders to be put together, which part orders pass through the order-picking area (1) in a manner corresponding to their composition.

4. Method according to Claim 3, characterized in that the part orders are standard packs of a specific number of units of a product or superior packs with one or more products and numbers of units which are smaller than the numbers of units of the corresponding standard packs.

5. Method according to one of Claims 1 to 4, characterized in that, in a transport step which is carried out between order-picking steps, an order or part order being produced is transported on a connecting path from one order-picking station to the next, in that it passes one or more order-picking stations as a result of being transported via a plurality of connecting paths, or in that it is not transported and remains in the same order-picking station.

6. Method according to one of Claims 1 to 5, characterized in that orders and/or part orders being produced are buffered on connecting paths or output paths.

7. Method according to one of Claims 1 to 6, characterized in that while transport steps are being carried out between order-picking steps, product groups are prepared in the order-picking stations by separating and counting out the units, and products groups prepared in the order-picking steps are added to orders or part orders being produced.

8. Method according to one of Claims 1 to 7, characterized in that the orders and/or part orders being processed are transported in compartments formed by the transport means or in containers.

9. Method according to Claim 8, characterized in that the containers are returned within the arrangement or within the system.

10. Method according to one of Claims 1 to 9, characterized in that the orders and/or part orders coming out of the order-picking area are visibly identified in an identification station (4), are packed in a packing station (5), are inspected in an inspection station (9) and/or are forwarded to various delivery paths by a diverter system (61) in a delivery station (6).

11. Method according to one of Claims 1 to 10, characterized in that orders and/or part orders are buffered after emerging from the order-picking area and are then fed back into the order-picking area again for further order picking.

12. Method according to one of Claims 1 to 11, characterized in that the order-picking data (Kₙ), before being further processed in the path and cycle sequence allocation system (23), are processed in an order-data preparation system (22) to form prepared order data (Kₙ').

13. Arrangement for implementing a method according to one of Claims 1 to 12, the arrangement having, in order to carry out order-picking steps and transport steps, an order-picking area (1) with a plurality of order-picking stations (A, B, C,...), each having at least one supplying means (AA, BB, CC...)for a product and means for separating and for the controlled counting of the units of this product, having a plurality of transporting means (A-B, B-C...) which connect at least two order-picking stations each in one direction and using which orders being produced can be transported in one direction, and having transporting means (C-11, D-11, E-11) which connect at least some of the order-picking stations to area outlets (11) and using which finished orders can be transported to at least one outlet (11) from the order-picking area, characterized in that, for cycling alternating order-picking steps and transport steps, a cycle generator (3) is provided, and in that, for acquiring order data, allocating paths and cycle sequences with optimization and for generating control data, an appropriately equipped control unit (2) is provided, and in that the order-picking stations and transporting means can be activated by the control unit.

14. Arrangement according to Claim 13, characterized in that each order-picking station (A, B, C...) has connected to it a transporting means to an outlet (11.1, 11.2,...).

15. Arrangement according to one of Claims 13 or 14, characterized in that a supplying means for order-picking containers is connected to at least some of the order-picking stations.

16. Arrangement according to one of Claims 13 to 15, characterized in that at least some of the transporting means that connect the order-picking stations and/or the transporting means of the output paths are constructed as transporting means (70/72.1/72.2/73) which form compartments.

17. Arrangement according to Claim 16, characterized in that the transport means which form compartments have a conveyor belt (70) or a roller track and side belts (72.1, 72.2) with dividing pieces (73).

18. Arrangement according to one of Claims 13 to 17, characterized in that the products supplies to at least some of the order-picking stations have a feeder, a winding station or a single-sheet deliverer.

19. Arrangement according to one of Claims 13 to 18, characterized in that at least some of the order-picking stations have precollectors (77) for preparing product groups.

20. Arrangement according to Claim 19, characterized in that the precollectors (77) are arranged above an order or part order to be supplied, and in that the bottom of the said precollectors can be removed or folded up under control, so that a prepared product group falls onto the order or part order being produced.

21. Arrangement according to one of Claims 13 to 20, characterized in that it also has at least one identification station (4), at least one packing station (5), at least one delivery station (6), with or without a diverter system (61), and/or at least one means (7) for feeding back order containers within the arrangement, with a separating point (71) for separating containers and order or part order.

22. Arrangement according to one of Claims 13 to 21, characterized in that it also has a means (8) for feeding back orders and/or part orders, with a buffer (81).

23. Arrangement according to one of Claims 13 to 22, characterized in that it has a plurality of order-picking areas or order-picking part-areas (1.1, 1.2), which are subject to different cycles.

## Revendications

1. Procédé de préparation de commande de produits, dans lequel procédé des éléments préparés (K), constitués de produits ayant été amenés dans un champ de préparation (1), ayant des compositions prédéterminées, constitués de nombres (a, b, c...) quelconques de produits quelconques parmi les produits amenés, sont préparés et sont emportés du champ de préparation (1), le champ de préparation (1) présentant une pluralité de postes de préparation (A, B, C,...), à chacun desquels est amené au moins un produit, des voies de liaison (A-B, B-C...) entre les postes de préparation, sur lesquelles les préparations constituées sont susceptibles d'être transportées entre des postes de préparation, dans une direction, et des voies de sortie (D-11, E-11), sur lesquelles des préparations terminées sont susceptibles d'être transportées vers au moins une sortie (11), à partir du champ de préparation, et le procédé étant constitué essentiellement d'étapes de préparation de commande, dans lesquelles en des postes de préparation (A, B, C,...) des préparations (K), formées de groupes de produits (aA, bB, cC...) constitués d'un nombre, correspondant à la composition prédéterminée d'exemplaires d'un produit, sont adjointes, et d'étapes de transport, dans lesquelles les préparations (K) constituées sont transportées sur des voies de liaison (A-B, B-C...) et des voies de sortie (D-11, E-11), caractérisé en ce que, selon des cycles (T₁, T₂, T₃...) successifs, des étapes de préparation et des étapes de transport alternées sont effectuées, où, dans une partie de préparation de chaque cycle simultané, dans différents postes de préparation (A, B, C,...), des étapes de préparation sont effectuées et, dans une partie de transport de chaque cycle, sur différentes voies de liaison (A-B, B-C...) et voies de sortie (D-11, E-11), différentes étapes de transport sont effectuées simultanément,
et en ce que, pour chaque préparation (K) à constituer, des données de préparation (Kₙ = aₙA, bₙB, cₙC...), correspondant à sa position prédéterminée, sont appréhendées,
en ce que, dans un processus d'optimisation, avec des conditions aux limites prédéterminées, à chaque préparation (K),est associée une voie correspondant aux données de préparation appréhendées, à travers le champ de préparation (1), et une succession de cycles pour parcourir la voie, de manière que les postes de préparation soient déchargés de façon aussi régulière que possible et que des étapes de préparation faites sans addition d'un groupe de produits soient évitées autant que possible,
et en ce que les étapes de préparation et les étapes de transport sont commandées par des données de commande, ces données de commande étant générées à l'aide des voies et des suites de cycles associées aux préparations

2. Procédé selon la revendication 1, caractérisé en ce que les conditions prédéterminées pour le processus d'optimisation sont des conditions de séquences prédéterminées à la sortie (11) du champ de préparation (1) ou des conditions pour l'ordre de succession des étapes de préparation.

3. Procédé selon la revendication 1 ou 2, caractérisé en ce que les préparations à établir sont réparties en des préparations partielles à établir, ces préparations partielles parcourant le champ de préparation (1) d'une manière correspondante à leur composition.

4. Procédé selon la revendication 3, caractérisé en ce que les préparations partielles sont des paquets normalisés d'un nombre d'exemplaires déterminé d'un produit ou des paquets de pointe de charge ayant un ou plusieurs produits et nombre d'exemplaires, inférieurs aux nombres d'exemplaires de paquets normalisés correspondants.

5. Procédé selon l'une des revendications 1 à 4, caractérisé en ce que, dans une étape de transport effectuée entre des étapes de préparation, des préparations ou des préparations partielles constituées sont transportées sur une voie de liaison allant d'un poste de préparation au poste subséquent, en ce qu'elles sont passées par transport sur plusieurs voies de liaison, en un ou plusieurs postes de préparation, ou bien en ce qu'elles ne sont pas transportées et subsistent au même poste de préparation.

6. Procédé selon l'une des revendications 1 à 5, caractérisé en ce que les préparations et/ou les préparations partielles constituées sont mises en tampons sur des voies de liaison ou des voies de sortie.

7. Procédé selon l'une des revendications 1 à 6, caractérisé en ce que pendant la réalisation des étapes de transport entre des étapes de préparation, dans les postes de préparation des groupes de produits sont préparés par individualisation et comptage des exemplaires et, dans les étapes de préparation, sont ajoutés des groupes de produits ayant été préparés, pour constituer des préparations ou des préparations partielles.

8. Procédé selon l'une des revendications 1 à 7, caractérisé en ce que les préparations et/ou les préparations partielles constituées sont transportées dans des compartiments ou dans des récipients, constitués par le moyen de transport.

9. Procédé selon la revendication 8, caractérisé en ce que les récipients sont retournés de façon interne au dispositif ou de façon interne au système.

10. Procédé selon l'une des revendications 1 à 9, caractérisé en ce que les préparations et/ou les préparations partielles sortant du champ de préparation sont identifiées de façon visible dans un poste d'identification (4), sont emballées dans un poste d'emballage (5), contrôlées dans un poste de contrôle (9) et/ou amenées, en suivant différentes voies de livraison, à un poste de livraison (6), au moyen d'un système d'aiguillage (61).

11. Procédé selon l'une des revendications 1 à 10, caractérisé en ce que des préparations et/ou des préparations partielles sont mises en tampon après leur sortie du champ de préparation, puis amenées de nouveau au champ de préparation pour subir une autre préparation.

12. Procédé selon l'une des revendications 1 à 11, caractérisé en ce que les données de préparations (Kₙ) sont traitées avant leur retraitement dans l'affectation de voie et de suite de cycles (23), en une unité de traitement de données de préparation (22), pour former des données de préparation préparées (Kₙ').

13. Dispositif de mise en oeuvre d'un procédé selon l'une des revendications 1 à 12, ce dispositif présentant un champ de préparation (1) pour la mise en oeuvre des étapes de préparation et des étapes de transport, avec une pluralité de postes de préparation (A, B, C,...) ayant chacun une amenée (AA, BB, CC,...) pour un produit et des moyens d'individualisation et de comptage commandé des exemplaires de ce produit, avec une pluralité de moyens de transport (A-B, B-C...), reliant au moins deux postes de préparation dans une direction, à l'aide desquels les préparations constituées sont susceptibles d'être transportées dans une direction, et avec des moyens de transport (C-11, D-11, E-11), reliant au moins une partie des postes de préparation à des sorties de champ (11), moyens de transport à l'aide desquels des préparations terminées sont susceptibles d'être transportées depuis le champ de préparation vers au moins une sortie (11), caractérisé en ce que, pour assurer le cadencement des étapes de préparation et des étapes de transport qui alternent, est prévu un transducteur de cadencement (3), et en ce que, pour appréhender des données de préparation, pour affecter la voie et la succession de cycles avec optimisation et pour générer des données de commande, est prévue une unité de commande (2) dotée d'un équipement correspondant, et en ce que les postes de préparation et les moyens de transport sont susceptibles d'être commandés par l'unité de commande.

14. Dispositif selon la revendication 13, caractérisé en ce qu'à chaque poste de préparation (A, B, C...) est raccordé un moyen de transport allant à une sortie (11.1, 11.2,...).

15. Dispositif selon l'une des revendications 13 ou 14, caractérisé en ce qu'à au moins une partie des postes de préparation est raccordée une amenée pour un récipient de préparation.

16. Dispositif selon l'une des revendications 13 à 15, caractérisé en ce qu'au moins une partie des moyens de transport reliant les postes de préparation et/ou des moyens de transport des voies de sortie, sont réalisés sous forme de moyens de transport (70/72.1/72.2/73) constitués sous forme de compartiments.

17. Dispositif selon la revendication 16, caractérisé en ce que les moyens de transport constitués sous forme de compartiments présentent une bande transporteuse (70) ou une bande à rouleaux et des bandes latérales (72.1, 72.2) équipées de pièces de division (73).

18. Dispositif selon l'une des revendications 13 à 17, caractérisé en ce que les amenées de produit à au moins une partie des postes de préparation présentent un presseur-margeur, un poste d'enroulement ou un presseur-margeur de feuilles individuelles.

19. Dispositif selon l'une des revendications 13 à 18, caractérisé en ce qu'au moins une partie des postes de préparation présentent des précollecteurs (77) destinés à la préparation de groupes de produits.

20. Dispositif selon la revendication 19, caractérisé en ce que les précollecteurs (77) sont disposés au-dessus d'une préparation ou d'une préparation partielle à livrer, et en ce que leurs fonds sont susceptibles d'être enlevés, respectivement ouverts par rabattement, de façon commandée, de manière qu'un groupe de produits préparés tombent sur la préparation ou la préparation partielle constituée.

21. Dispositif selon l'une des revendications 13 à 20, caractérisé en ce qu'il présente en plus au moins un poste d'identification (4), au moins un poste d'emballage (5), au moins un poste de livraison (6) avec ou sans système d'aiguillage (61), et/ou au moins un retour (7) pour des récipients de préparation internes au dispositif, avec un point de séparation (71) destiné à séparer le récipient et la préparation ou la préparation partielle.

22. Dispositif selon l'une des revendications 13 à 21, caractérisé en ce qu'il présente en plus un retour (8) destiné à des préparations et/ou des préparations partielles, avec un tampon de stockage (81).

23. Dispositif selon l'une des revendications 13 à 22, caractérisé en ce qu'il présente plusieurs champs de préparation ou parties de champs de préparation (1.1, 1.2), placé(e)s hiérarchiquement au-dessous des différents cycles.
